## Europäisches Patentamt

## European Patent Office

## Office européen des brevets

(11) Veröffentlichungsnummer: **0 015 878**
A1

# EUROPÄISCHE PATENTANMELDUNG

(21) Anmeldenummer: 80810074.7

(22) Anmeldetag: 28.02.80

(51) Int. Cl.³: **B 62 H 5/18**

(30) Priorität: 06.03.79 CH 2143/79

(43) Veröffentlichungstag der Anmeldung: **17.09.80**
Patentblatt 80/19

(84) Benannte Vertragsstaaten: **BE DE FR GB IT NL**

(71) Anmelder: **Miroslav, Tresky, Dr.Ing., Tödistrasse 106, CH-8800 Thalwil (CH)**

(72) Erfinder: **Miroslav, Tresky, Dr.Ing., Tödistrasse 106, CH-8800 Thalwil (CH)**

(54) **Abschliessvorrichtung zum Verhindern eines unberechtigten Gebrauchs oder Diebstahls eines Fahrzeuges, insbesondere eines Fahrrades.**

(57) Abschließvorrichtung zum Verhindern eines unberechtigten Gebrauchs oder Diebstahls eines Fahrzeuges, insbesondere eines Fahrrades, bestehend aus einem in zwei Endstellungen blockierbaren und mittels eines Schlosses (3, 14, 39) abschließbaren Blockiermechanismus (50, 60, 70). In der einen Endstellung verbindet der Blockiermechanismus die beiden Bremsbacken (20, 26), hingegen in der zweiten Endstellung ist er inaktiv.

Abschliessvorrichtung zum Verhindern eines unberechtigten Gebrauchs oder Diebstahls eines Fahrzeuges, insbesondere eines Fahrrades.

Die Erfindung bezieht sich auf eine Abschliessvorrichtung zum Verhindern eines unberechtigten Gebrauchs oder Diebstahls eines Fahrzeuges, insbesondere eines Fahrrades, das mit einer Backenbremse versehen ist.

Bei bekannten Abschliessvorrichtungen werden abschliessbare Riegel oder Schlaufen zwischen die Speichen eines Rades hineingebracht. Es ist dabei von Nachteil, dass eine unberechtigte Manipulation mit dem Fahrzeug eine Beschädigung der Speichen und somit eine Bedrohung der Fahrsicherheit zur Folge hat. Das notwendige Tragen von relativ grossen Riegeln oder Schlaufen bedeutet eine zusätzliche Beeinträchtigung des Fahr-und Bedienungskomforts.

Die Erfindung, wie sie in der Ansprüchen gekennzeichnet ist, löst die Aufgabe, eine Abschliessvorrichtung zu finden, bei welcher die Gefahr der Beschädigung der Speichen eliminiert wird und die einen grösseren Fahr-und Bedienungskomfort bietet.

Drei Ausführungsbeispiele der erfindungsgemässen Abschliessvorrichtung werden im folgenden anhand der Zeichnung näher erläutert.
Es zeigen:

Figur 1 eine Abschliessvorrichtung nach dem ersten Ausführungsbeispiel in Ansicht, in einer geöffneten Stellung einer Backenbremse

Figur 2 eine Abschliessvorrichtung nach dem zweiten Ausführungsbeispiel in Ansicht, in einer abgeschlossenen Bremsstelleng einer Backenbremse

Figur 3 eine Abschliessvorrichtung nach dem dritten Ausführungsbeispiel in Ansicht, in einer abgeschlossenen Bremsstellung einer Backenbremse

Figur 4 einen Schnitt nach Linie IV-IV in Figur 3

0015878

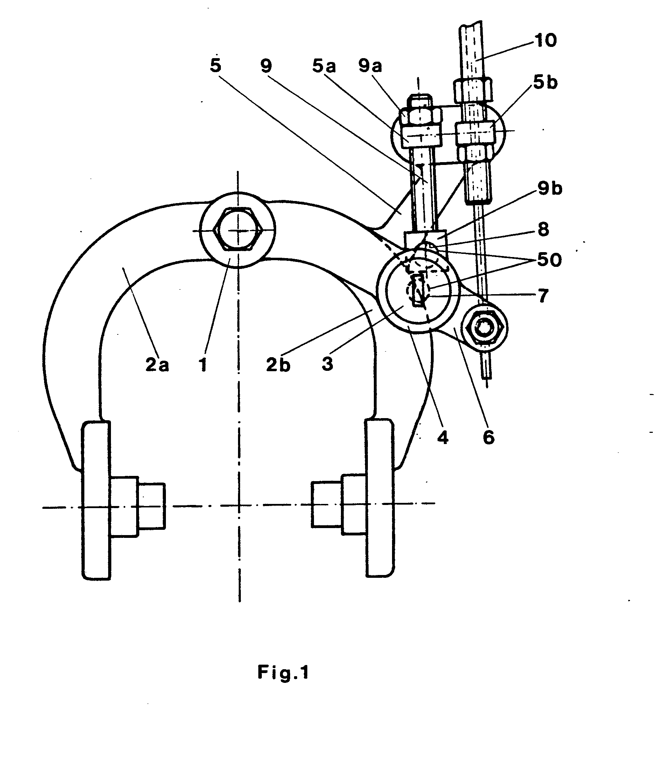

Gemäss Figur 1 weist eine Backenbremse 1 eines nicht näher dargestellten Fahrzeuges, beispielsweise eines Fahrrades oder Motorrades
zwei Backen 2a,2b auf. Die Backe 2a ist mit einem Arm 6 versehen,
an welchem ein rohrförmiger Schlosshalter 4 mit einem an sich bekannten verschiebbaren Schloss 3 angebracht ist. Dass Schloss 3
weist einen Verriegelungsteil 7 auf. Die Backe 2b ist mit einem
Halter 5 ausgestattet, in dessen Ansatz 5a eine Verstellschraube 9
eingeschraubt und über eine Mutter 9a gesichert ist. In einem Kopf
9b der Verstellschraube 9 ist eine dem Verriegelungsteil 7 entsprechende Öffnung 8 angefertigt. Der Schlosshalter 4 und die Verstellschraube 9 sind derart angebracht, dass die Öffnung 8 und der
Verriegelungsteil 7 koaxial liegen wenn sich die Backen 2a und 2b
in einer Bremsstellung befinden. In einem weiteren Ansatz 5b des
Halters 5 ist ein Verbindungsglied 10 zu einem weiter nicht näher
dargestellten, an sich bekannten Betätigungsmechanismus der Backenbremse 1 eingeschraubt. Die Verstellschraube 9 mit ihrem Kopf 9b
und der Verriegelungsteil 7 bilden zusammen einen Blockierungsmechanismus 50.

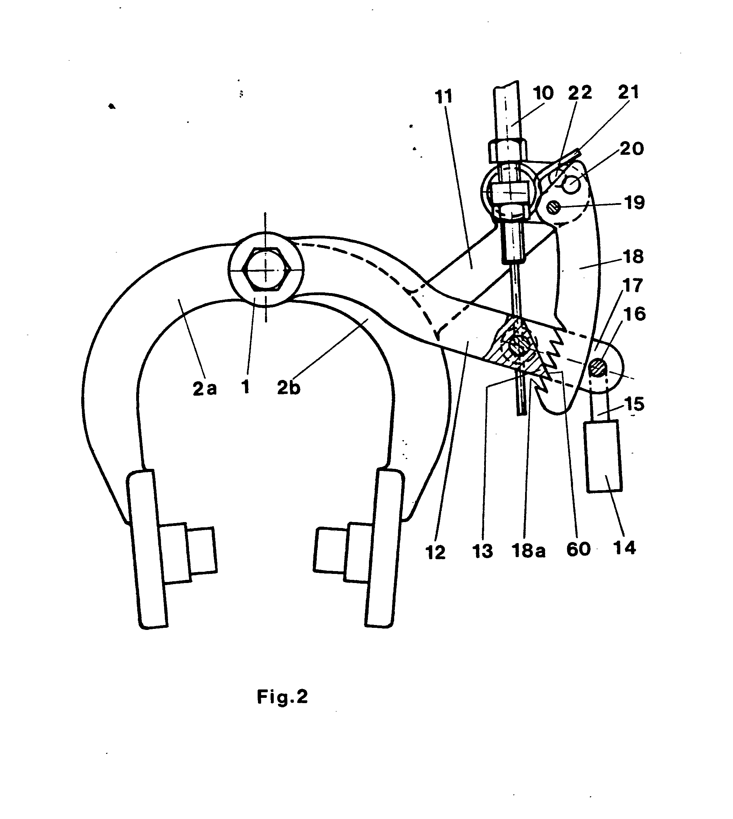

Gemäss Figur 2 ist die Backe 2a der Backenbremse 1 mit einem an
seinem Ende gabelformig geschlitzten Arm 12 versehen. Die Backe 2a
trägt einen Halter 11, an welchem ein Segment 18 um eine Achse 19
schwenkbar gelagert ist. Das Segment 18 ist mit einer Verzahnung
18a versehen. In der Nähe der Achse 19 weist das Segment 18 eine
Bohrung 20 auf und eine Bohrung 22 des gleichen Durchmessers ist
auch im Halter 11 angefertigt. Beide Bohrungen 20,22 entsprechen im
Durchmesser dem Durchmesser eines Schlossbügels 15. Am Halter 11
ist eine Feder 21 befestigt, die am oberen Rande des Segments 18
eingreift. Der geschlitzte Arm 12 der Backe 2a bildet mit dem Grund
17a des Schlitzes 17 einen Gegenzahn 13 der gemäss Figur 2 mit der
Verzahnung 18a des Segments 18 im Eingriff steht. Der geschlitzte
Arm 12 ist ebenfalls mit einer dem Durchmesser des Schlossbügels 15
entsprechenden Bohrung 16 versehen, in welcher ein Hängeschloss 14
angebracht ist. Der Verzahnte Segment 18 mit seiner Verzahnung 18a
und der geschlitzte Arm 12 mit seinem Gegenzahn 13 bilden einen
Blockiermechanismus 60.

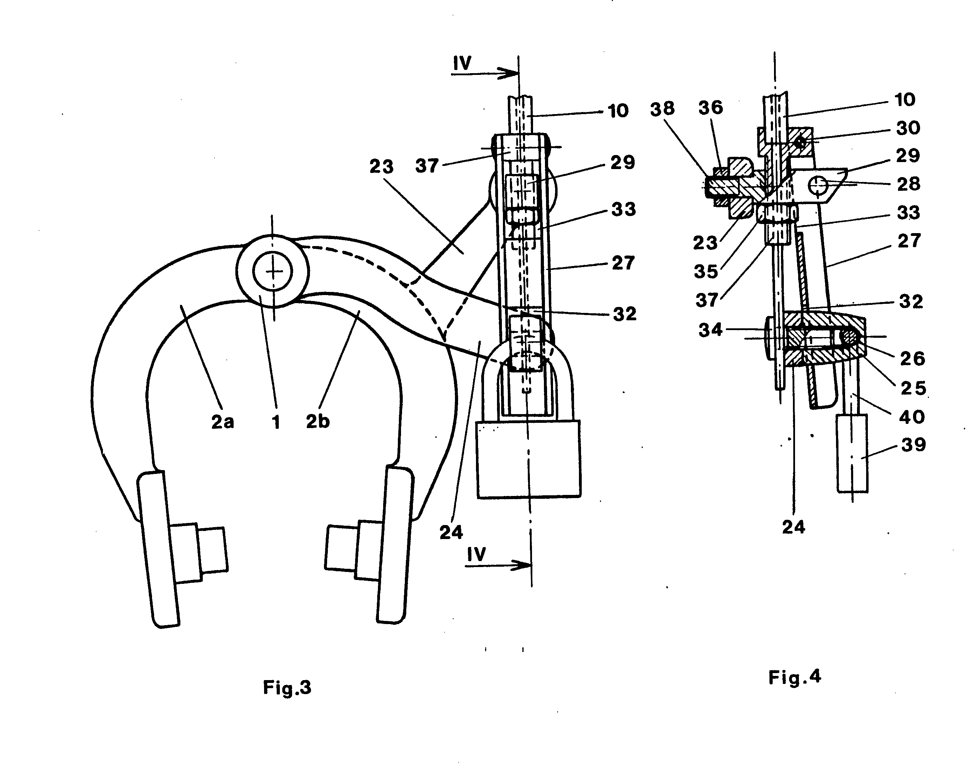

Gemäss Figur 3 und 4 ist die Backe 2b der Backenbremse 1 mit einem Halter ausgestattet. Am oberen Ende des Halters 23 ist mittels einer Schraube 38 und einer Mutter 36 ein Stellschraubehalter 29 befestigt, in welchem eine Stellschraube 37 eingeschraubt und mit einer Mutter 35 gesichert ist. Die Stellschraube 37 ist mit dem Verbindungsglied 10 zu dem nicht dargestellten Betätigungsmechanismus der Backenbremse 1 verbunden und trägt eine Welle 30, an welcher ein Hebel 27 schwenkbar gelagert ist. Der Hebel 27 ist mit Aussparungen 32,33 versehen. In die obere Aussparung 33 ragt der Stellschraubehalter 29 hinein, die untere Aussparung 32 wird gemäss Figur 3 und 4 durch einen zahnformigen Teil 25 durchgedrungen, der mittels einer Seilklemmschraube 34 mit einem Arm 24 der Backe 2a der Backenbremse 1 verbunden ist. In einer Bohrung 26 im Teil 25 ist ein Schlossbügel 40 des Hängeschlosses 39 angebracht. Der Stellschraubehalter 29 ist ebenfalls mit einer dem Durchmesser des Schlossbügels 40 entsprechenden Bohrung 28 versehen. Der Hebel 27 mit seiner unteren Aussparung 32 sowie der zahnformige Teil 25 bilden einen Blockiermechanismus 70.

Aus dem beschriebenen Aufbau ergibt sich folgende Wirkungsweise.

Bei dem in Figur 1 dargestellten ersten Ausführungsbeispiel der Abschliessvorrichtung erfolgt das Abschliessen durch Einziehen der Backen 2a,2b in eine Bremsstellung, was über den nicht dargestellten Betätigungsmechanismus und das Verbindungsglied 10 geschiet, ferner durch Aufschliessen des Schlosses 3 und Hineinschieben des Verriegelungsteiles 7 in die Öffnung 8 und zuletzt durch Abschliessen des Schlosses 3 im Schlosshalter 4. Das Aufschliessen findet in der umgekehrten Reihenfolge statt. Dargestellt ist in Figur 1 die abgeschlossene Stellung der Abschliessvorrichtung. Die beim Gebrauch der Backenbremse 1 mit der Zeit entstehende Abnützung der Bremsflächen an den Backen 2a,2b kann durch ein Verstellen der Verstellschraube 9 im Ansatz 5a des Halters 5 kompensiert werden.

Beim zweiten Ausführungsbeispiel der Abschliessvorrichtung nach Figur 2 springt beim Einziehen der Backenbremse 1 in die Bremsstellung zuerst der Gegenzahn 13 am Arm 12 der Backe 2a über die Zähne der Verzahnung 18a, bis schlussendlich unter der Wirkung d<
Feder 21 in einer Position eingerastet verbleib. Danach kann der
Betätigungsmechanismus losgelassen werden und durch Abschliessen
des Hängeschlosses 14 in der Bohrung 16 des Segments 18 im Eingriff mit dem Gegenzahn 13 gehalten werden. Diese eine Endstellu<
des Blockiermechanismus 60 ist in Figur 2 dargestellt. Beim Aufschliessen der Abschliessvorrichtung wird das Hängeschloss 14 geöffnet und aus der Bohrung 16 herausgenommen. Danach wird der Betätigungsmechanismus losgelassen und das Segment 18 um die Achse
19 im Gegenuhrzeigersinn geschwenkt, bis sich die Bohrung 20 im
Segment 18 mit der Bohrung 22 im Halter 11 deckt, wonach das Hängeschloss 14 mit seinem Schlossbügel 15 in die beiden Bohrungen
20,22 hineingelegt wird. Somit wird der Blockiermechanismus 60
in der anderen Endstellung gehalten. Die Kompensation der Abnützi
der Bremsflächen der Backen 2a,2b erfolgt bei dieser Lösung automatisch, da auf dem verzahnten Segment 18 mehrere Zähne zum Einrasten des Gegenzahnes 13 zur Verfügung stehen.

Die Abschliessvorrichtung nach dem dritten Ausführungsbeispiel i<
in Figur 3 und 4 in der abgeschlossenen Bremsstellung der Backenbremse 1 dargestellt. Soll diese aufgeschlossen werden, so wird
das Hängeschloss 39 aus der Bohrung 26 herausgenommen und der Hebel 27 um die Welle 30 im Gegenuhrenzeigersinn so hoch geschwenkt
dass seine Unterkante oberhalb der Bohrung 28 im Stellschraubehal
ter 29 liegt. Danach wird das Hängeschloss 39 mit seinem Schlossbügel 40 in die Bohrung 28 derart hineingelegt und geschlossen,
das der Schlossbügel 40 den Hebel 27 umfasst. Somit wird der
Blockiermechanismus 70 in der Endstellung gehalten, in welcher di
Abschliessvorrichtung inaktiv ist. Soll die Abschliessvorrichtung
wieder in die aktive Stellung gebracht werden, so wird das Hängeschloss 39 wieder geöffnet und der Schlossbügel 40 aus der Bohrun
28 herausgezogen, die Backen 2a,2b werden über den Betätigungsmechanismus und das Verbindungsglied 10 in die Bremsstellung gebrac
der schwenkbare Hebel 27 des Blockiermechanismus 70 mit seiner
unteren Aussparung 32 wird über den zahnformigen Teil 25 überzoge
und schlussendlich der Schlossbügel 40 in die Bohrung 26 hineinge
legt und das Hängeschloss 39 wieder abgeschlossen, wodurch die andere Endstellung des Blockiermechanismus 70 gesichert wird. Da bei dieser Lösung der schwenkbare Hebel 27 mit der Stellschraube 29 verbunden ist, wird beim Nachstellen der Bremsbacken 2a,2b zwecks Kompensierung der Abnützung der Bremsflächen gleichzeitig auch die Abschliessvorrichtung zweckmässig nachgestellt.

In allen drei Fällen werden jeweils die den beiden Bremsbacken 2a,2b zugeordneten Teile des Blockiermechanismus 50 bzw. 60 bzw. 70 in der Bremsstellung der Backenbremse 1 miteinander im Eingriff gehalten. Durch das Schloss 3 bzw. 14 bzw. 39 soll eine unberechtigte Verstellung des Blockiermechanismus 50 bzw. 60 bzw. 70 verhindert werden.

Patentansprüche

1. Abschliessvorrichtung zum Verhindern eines unberechtigten Gebrauchs oder Diebstahls eines Fahrzeuges, insbesondere eines Fahrrades, das mit einer Backenbremse versehen ist, gekennzichnet durch einen verstellbaren Blockiermechanismus ( 50 bzw. 60 bzw. 70 ) zum Blockieren der Backen ( 2a,2b ) in einer Bremsstellung, der den beiden Backen ( 2a,2b ) zugeordnete, miteinander in Eingriff bringbare Teile ( 7,9 bzw. 12,18 bzw. 25,27) aufweist, und ferner durch ein die unberechtigte Verstellung des Blockiermechanismus ( 50 bzw. 60 bzw. 70 ) verhinderndes Schloss ( 3 bzw. 14 bzw. 39 ).

2. Abschliessvorrichtung nach Anspruch 1, dadurch gekennzeichnet, dass das Schloss (3) in einem Schlosshalter (4) an einem mit der einen Backe (2a) verbundenen Arm (6) angeordnet und mit einem verschiebbaren Verriegelungsteil (7) versehen ist, dass die andere Backe (2b) mit einer Verstellschraube (9) verbunden ist, deren Kopf (9a) eine Öffnung (8) aufweist, und dass der Verriegelungsteil (7) in die Öffnung (8) hineinschiebbar ist und mit der Verstellschraube (9) den Blockiermechanismus (50) bildet.

3. Abschliessvorrichtung nach Anspruch 1, dadurch gekennzeichnet, dass die miteinander in Eingriff bringbaren Teile des Blockiermechanismus (60) durch ein der einen Backe (26) zugeordnetes, schwenkbar gelagertes, federbelastetes und verzahntes Segment (18) sowie durch einen an einem der anderen Backe (2a) zugeordneten Arm (12) angebrachten Gegenzahn (13) gebildet sind und dass durch Anbringen des Schlosses (14) das schwenkbare Segment (18) in zwei Endstellungen blockierbar ist.

4. Abschliessvorrichtung nach Anspruch 1, dadurch gekennzeichnet, dass die miteinander in Eingriff bringbare Teile des Blockiermechanismus (70) einen der einen Backe (2a) zugeordneten, schwenkbar gelagerten Hebel (27) sowie durch einen der anderen Backe (2a) zugeordneten Teil (25) gebildet sind, wobei der Hebel (27) mit einer Aussparung (32) versehen ist, mit der er auf den Teil (25) aufschiebbar ist, und dass durch Anbringen des Schlosses (39) der schwenkbare Hebel (27) in zwei Endstellungen blockierbar ist.

5. Abschliessvorrichtung nach Anspruch 3, dadurch gekennzeichnet, dass durch Anbringen des Schlosses (14) in eine im Arm (12) vorhandene Bohrung (16) das Segment (18) im Eingriff mit dem Gegenzahn (13) gehalten wird und durch Anbringen des Schlosses (14) in eine im Segment (18) vorhandene, sowie in eine an der einen Backe (2b) angebrachte Bohrung (20,22) das Segment (18) ausser Eingriff mit dem Gegenzahn (13) gehalten wird.

6. Abschliessvorrichtung nach Anspruch 4, dadurch gekennzeichnet, dass durch Anbringen des Schlosses (39) in eine im Teil (25) angefertigte Bohrung (26) der Hebel (27) in seiner auf den Teil (25) aufgeschobenen Stellung gehalten wird und dass durch Anbringen des Schlosses (39) in eine an der einen Backe (2b) vorgesehene Bohrung (28) der Hebel (27) ausser Eingriff mit dem Teil (25) gehalten wird.

0015878

**Fig.1**

**Fig.2**

IV

38  36  10

23  37  10

29  30

33  29

27  28

32  23

24  35

37

34  33

27

2a  1  2b

32

26

25

40

39

24

Fig.3  Fig.4

0015878

Europäisches Patentamt

**EUROPÄISCHER RECHERCHENBERICHT**

0015878
Nummer der Anmeldung

EP 80 81 0074

| Kategorie | EINSCHLÄGIGE DOKUMENTE | | KLASSIFIKATION DER ANMELDUNG (Int.Cl.³) |
|---|---|---|---|
| | Kennzeichnung des Dokuments mit Angabe, soweit erforderlich, der maßgeblichen Teile | betrifft Anspruch | |
| | FR - A - 605 233 (ORTIZ) <br> * Seite 1; Figuren 1-7 * <br><br> -- | 1,2 | B 62 H 5/18 |
| | FR - A - 881 681 (CADOT) <br> * Seiten 1,2; Zeilen 1-80; Figuren 1-7 * <br><br> -- | 1,2 | |
| | DE - C - 283 712 (BOWDEN BREMSEN COMP.) <br> * Seiten 1,2; Figuren 1-3 * <br><br> ---- | 1 | **RECHERCHIERTE SACHGEBIETE (Int. Cl. ³)** <br><br> B 62 H <br> B 62 L |

X | Der vorliegende Recherchenbericht wurde für alle Patentansprüche erstellt.

| Recherchenort | Abschlußdatum der Recherche | Prüfer |
|---|---|---|
| Den Haag | 12-06-1980 | VANNESTE |

EPA form 1503.1 06.78